## Europäisches Patentamt
## European Patent Office
## Office européen des brevets

(11) Veröffentlichungsnummer: **0 144 307**
**A2**

(12) # EUROPÄISCHE PATENTANMELDUNG

(21) Anmeldenummer: **84890231.8**

(51) Int. Cl.⁴: **A 01 K 1/02**

(22) Anmeldetag: **26.11.84**

(30) Priorität: **28.11.83 AT 4165/83**

(43) Veröffentlichungstag der Anmeldung:
**12.06.85 Patentblatt 85/24**

(84) Benannte Vertragsstaaten:
**AT BE CH DE LI NL**

(71) Anmelder: **Assmann Kunststoffindustrie Gesellschaft m.b.H.**

**A-8443 Gleinstätten(AT)**

(72) Erfinder: **Bauer, Eduard
Wagnastrasse 100
A-8435 Wagna(AT)**

(74) Vertreter: **Haffner, Thomas M., Dr.
Patentanwaltskanzlei Dipl.-Ing. Adolf Kretschmer Dr.
Thomas M. Haffner Schottengasse 3a
A-1014 Wien(AT)**

(54) Ferkelbox.

(57) Eine in einem Schweinestall anzuordnende Ferkelbox (1) ist von Seitenwänden (2, 3, 4, 6) und einem mit diesen starr verbundenen Boden (7) gebildet, wobei eine längere (3) und eine kürzere Seitenwand (2) vorgesehen ist, welche im rechten Winkel zueinander stehen. Der Grundriß der Ferkelbox (1) verschmälert sich in Richtung der längeren Seitenwand (3) von der kürzeren Seitenwand (2) weg, wobei sie eine Grundfläche von mindestens 0,5 m² und vorzugsweise höchstens 0,6 bis 0,7 m² aufweist. Die Ferkelbox (1) at einen trapezförmigen oder dreieckförmigen Grundriß und weist an der der längeren Seitenwand (3) gegenüberliegenden Seitenwand (4) eine Türöffnung (5) auf. Sie ist beheizbar und weist einen abnehmbaren Deckel (8) auf. Eine solche Ferkelbox (1) kann infolge ihrer Bemessung in jedem Schweinestall nachträglich aufgestellt werden und bietet infolge ihrer Bemessung und des Klimas einen Anreiz für die Ferkel, von selbst in die Ferkelbox (1) zu gehen.

FIG.3

EP 0 144 307 A2

Croydon Printing Company Ltd.

Ferkelbox

Bei Ferkeln wurde häufig ein Sterben beobachtet, dessen Ursache jedoch nicht vollständig geklärt war.

Die Erfindung geht nun von der Erkenntnis aus, daß die Ursache dieses Ferkelsterbens in ungünstigen Temperaturverhältnissen gelegen ist. Ferkel benötigen für ihre gute Entwicklung eine Temperatur von 35 bis 39°C. Dies gilt für die ersten vier bis sechs Lebenswochen. In dieser Zeit sinkt die optimale Temperatur um 1°C pro Woche ab. Mutterschweine vertragen jedoch nur eine wesentlich niedrigere Temperatur. Diese Temperatur soll nach Möglichkeit maximal 22°C betragen. Bei Temperaturen von 30°C besteht bereits die Gefahr eines Kreislaufkollaps. Wenn die Temperatur für die Ferkel zu niedrig ist, so frieren die Ferkel und legen sich in einem Haufen aufeinander. Hiebei kommt es häufig vor, daß die zuunterst liegenden Ferkel erdrückt oder zumindest geschädigt werden.

Von dieser Erkenntnis ausgehend stellt sich die Erfindung zur Aufgabe, für die Ferkel ein Klima zu schaffen, welches ihre optimale Entwicklung begünstigt, und trotzdem das für das Mutterschwein erforderliche oder günstige Klima aufrecht zu erhalten.

Gemäß der Erfindung wird, wenn das Mutterschwein Ferkel wirft, eine Ferkelbox im Stall angeordnet. Die Erfindung besteht nun im wesentlichen darin, daß die Ferkelbox beheizbar ist, daß sie von Seitenwänden und einem mit diesen starr verbundenen Boden gebildet ist, daß eine längere und eine kürzere Seitenwand im rechten Winkel zueinander stehen, daß sich ihr Grundriß in Richtung der längeren Seitenwand von der kürzeren Seitenwand weg verschmälert, daß sie eine Grundfläche von mindestens 0,5 m² und vorzugsweise höchstens 0,6 bis 0,7 m² aufweist, daß sie an der der längeren Seitenwand gegenüberliegenden Seitenwand eine Türöffnung aufweist und daß sie einen abnehmbaren Deckel aufweist.

Dadurch, daß die Ferkelbox beheizbar ist, kann für die Ferkel ein anderes Klima geschaffen werden als für das Mutterschwein. Die Temperatur in der Box kann in der Höhe gehalten werden, in welcher sie den Ferkeln zusagt, und es wird dadurch erreicht, daß die Ferkel von selbst in die Box gehen, sobald sie gesäugt wurden, und daß sie auch tatsächlich in der Box bleiben. Dadurch, daß die Seitenwände mit dem Boden starr verbunden sind, können die in der Box befindlichen Ferkel die Box nicht am Boden verschieben. Für das Mutterschwein wird im Stall eine käfigartige Barriere vorgesehen. Diese Barriere ist in verschiedenen Ställen verschieden angeordnet. Es ist entweder die Barriere ungefähr in der Mitte und parallel zu den Seitenbegrenzungen des Stalles vorgesehen oder sie ist diagonal angeordnet. Die im rechten Winkel zueinander stehenden Seitenwände ermöglichen, die Ferkelbox in eine Ecke zu stellen. Dadurch, daß sich der Grundriß in Richtung der längeren Seitenwand von der kürzeren Seitenwand weg verschmälert, wird den verschiedenen Anordnungen der Barriere im Schweinestall Rechnung getragen, da nunmehr die Ferkelbox der Barriere nicht im Wege steht. Dadurch, daß die Grundfläche der Box mindestens 0,5 m² beträgt, wird erreicht, daß die Ferkel genügend Raum finden und nicht in der Box raufen. Es soll aber auch die Grundfläche der Box nicht zu groß bemessen sein, daß bei zu großer Bemessung die Ferkel in der Box misten, was nach Möglichkeit vermieden werden soll. Dies ist der Grund, warum die Grundfläche der Box vorzugsweise höchstens 0,6 bis 0,7 m² aufweisen soll. Dadurch, daß die Türöffnung, durch welche die Ferkel in die Box gelangen können, an der der längeren Seitenwand gegenüberliegenden Seitenwand angeordnet ist, ist die Türöffnung dem Mutterschwein zugewendet und das Mutterschwein hat die Sicht aus seiner Stellung innerhalb der Barriere auf die Ferkel. Wenn dies nicht der Fall ist, wird das Mutterschwein beunruhigt und die Unruhe geht dann wieder auf die Ferkel über. Dadurch, daß die Box einen Deckel aufweist, wird das Klima in der Box aufrechterhalten und dadurch, daß dieser Deckel abnehmbar ist, ist die Ferkelbox zum Zwecke der Reinigung und für den Tierarzt, welcher fallweise Impfungen vornehmen muß, leicht zugänglich.

Gemäß einer bevorzugten Ausführungsform der Erfindung weist die Ferkelbox einen trapezförmigen oder dreieckförmigen Grundriß auf. Auf diese Weise ergibt sich eine einfache Formgebung und eine gute Anpassung an die Lage der Barriere für das Mutterschwein im Stall. Hiebei entspricht vorzugsweise die Länge des Grundrisses ungefähr dem 1 1/2-fachen der größten Breite desselben. Gemäß der Erfindung beträgt zweckmäßig die Höhe der Box mindestens 500 mm, vorzugsweise ungefähr 600 mm. Es hat sich herausgestellt, daß bei einer zu geringen Höhe die Ferkel Platzangst bekommen, unruhig werden und sich nicht wohl fühlen. Dies hat dann wieder zur Folge, daß die Ferkel nicht freiwillig in der Box bleiben. Wenn die Ferkel die Box verlassen, besteht die Gefahr einer Unterkühlung und damit wird wieder eine Ursache für das Ferkelsterben geschaffen.

Gemäß der Erfindung ist vorzugsweise die Türöffnung ungefähr in der Längsmitte der der längeren Seitenwand gegenüberliegenden Seitenwand angeordnet. Dies ergibt die beste Möglichkeit für das Mutterschwein, die Ferkel zu beobachten, und dadurch wird wieder eine Ursache für eine Beunruhigung ausgeschaltet.

Gemäß der Erfindung weist zweckmäßig die Türöffnung eine Breite von ungefähr 220 mm und höchstens aber von 250 mm auf. Diese Mindestbreite hat sich deshalb als besonders vorteilhaft herausgestellt, weil sie ermöglicht, daß die in den ersten Lebenswochen noch kleinen Ferkel zu zweit durch die Türe hindurchgehen. Wenn die Türöffnung schmäler wird, so raufen die Ferkel beim Versuch, durch die Türe einzutreten. Wenn die Ferkel größer werden, können sie immer noch einzeln durch die Türe hindurchgehen, und es hat sich gezeigt, daß im späteren Lebensalter dann die Ferkel nicht mehr raufen. Eine größere Breite der Türöffnung als 250 mm bringt in bezug auf den Zugang der Ferkel keine Vorteile, hat aber den Nachteil, daß Wärme verloren geht. Diese Höhe reicht ohne weiteres auch in den späteren Lebenswochen der Ferkel aus. Eine größere Höhe hat den Nachteil des Auskühlens der Box und vor allem den Nachteil, daß dadurch Zugluft entsteht, welche den Ferkeln sehr abträglich ist.

Gemäß der Erfindung ist zweckmäßig an der Decke oder oberhalb der Unterfläche der Decke wenigstens ein Heizkörper angeordnet. Dies hat den Vorteil, daß die Ferkel nicht in Berührung mit dem Heizkörper kommen können. Der Heizkörper kann in einfacher Weise von einer elektrischen Glühlampe gebildet sein. Es können aber auch besonders ausgebildete Heizkörper vorgesehen sein und es ist gemäß der Erfindung zweckmäßig, die Heizung thermostatisch zu regeln, so daß die optimale Temperatur eingestellt werden kann. Wie oben angeführt, nimmt die optimale Temperatur von 35 bis 39°C mit jeder Lebenswoche der Ferkel um 1°C ab und dem kann durch die thermostatische Regelung Rechnung getragen werden. Es kann ein elektrischer Heizkörper vorgesehen sein oder, wenn der Stall entsprechend ausgebildet ist, ist auch eine Warmwasserheizung möglich.

Gemäß der Erfindung soll die Türöffnung verschließbar sein. Damit wird die Möglichkeit geboten, die Ferkel in der Box während der Zeiträume einzusperren, in welchen sie nicht zum Mutterschwein gelangen sollen oder wenn der Tierarzt Impfungen vornehmen muß.

In der Zeichnung ist die Erfindung anhand von Ausführungsbeispielen schematisch erläutert.

- 5 -

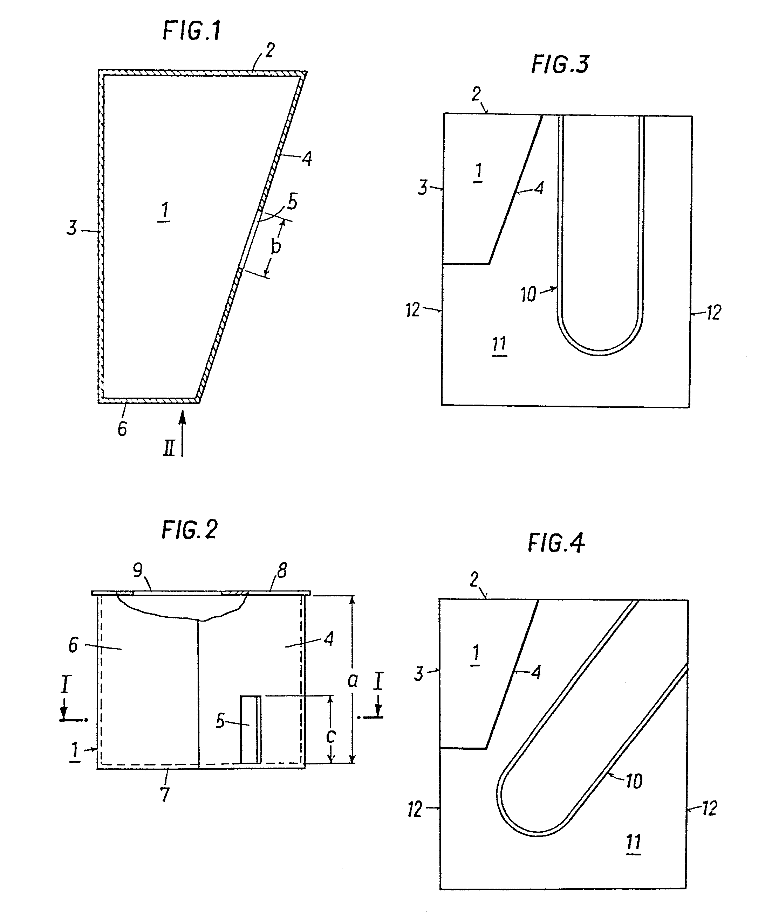

Die Fig. 1 und 2 zeigen eine Ferkelbox, wobei Fig. 1 einen Schnitt nach Linie I-I der Fig. 2 und Fig. 2 eine Ansicht in Richtung des Pfeiles II der Fig. 1 darstellt. Die Fig. 3 und 4 zeigen die Anordnung der Box in verschieden eingerichteten Schweineställen.

Die Box 1 nach den Fig. 1 und 2 weist einen trapezförmigen Grundriß auf. Eine kürzere Seitenwand 2 und eine längere Seitenwand 3 stehen im rechten Winkel zueinander, so daß die Box, wie die Fig. 3 und 4 zeigen, in eine Ecke des Schweinestalles gerückt werden kann. Der längeren Seitenwand 3 liegt eine schräge Seitenwand 4 gegenüber, welche ungefähr in ihrer Längsmitte eine Türöffnung 5 für den Eintritt der Ferkel in die Box 1 aufweist. Der kürzeren Seitenwand 2 liegt eine Seitenwand 6 gegenüber. Die Seitenwände 2, 3, 4 und 6 sind mit dem Boden 7 fest verbunden, so daß die in der Box 1 befindlichen Ferkel die Box nicht verschieben können. An ihrer Oberseite ist die Box durch einen abnehmbaren Deckel 8 abgedeckt.

Die Grundfläche des Bodens 7 beträgt ungefähr 0,55 m². Die lichte Höhe a der Box beträgt etwa 600 mm. Die Breite b der Türöffnung 5 beträgt 220 mm und die Höhe c dieser Türöffnung beträgt 250 mm.

Der Deckel weist eine Öffnung 9 auf. Auf diese Öffnung kann beispielsweise ein Strahler aufgesetzt sein. Es kann ein Schirm mit einer Glühlampe aufgesetzt sein oder es kann in diese Öffnung ein elektrischer Heizkörper eingesetzt sein, welcher thermostatisch geregelt wird.

In der Zeichnung ist ein trapezförmiger Grundriß der Box 1 dargestellt. Der Grundriß kann aber auch dreieckförmig gewählt werden oder es kann auch die Seitenwand 6 schräg stehen, so daß sich keine exakte Trapezform ergibt. Wesentlich ist nur, daß die Breite des Grundrisses in Richtung der längeren Seitenwand 3 von der kürzeren Seitenwand 2 weg abnimmt. Dadurch werden die in den Fig. 3 und 4 dargestellten Anordnungen der Barriere für das Mutterschwein ermöglicht. Eine solche Barriere ist üblicherweise von einer U-förmig gebogenen Stange gebildet, an welche nach unten ragende Stäbe angeschweißt sind. In Fig. 3 ist eine Barriere 10 dargestellt, welche ungefähr mittig im Schweinestall 11 und parallel zu den Seitenwänden 12 des Schweinestalles 11 angeordnet ist. In Fig. 4 ist eine Barriere 10 dargestellt, welche schräg im Schweinestall 11 und schräg zu den Seitenwänden 12 angeordnet ist. In beiden Fällen findet die Ferkelbox 1 infolge des sich in Richtung der längeren Seitenwand 3 verjüngenden Grundrisses hinreichend Platz.

0144307

- 7 -

Patentansprüche:

1. In einem Schweinestall anzuordnende Ferkelbox, dadurch gekennzeichnet, daß sie beheizbar ist, daß sie von Seitenwänden (2,3,4,6) und einem mit diesen starr verbundenen Boden (7) gebildet ist, daß eine längere (3) und eine kürzere Seitenwand (2) im rechten Winkel zueinander stehen, daß sich ihr Grundriß in Richtung der längeren Seitenwand (3) von der kürzeren Seitenwand (2) weg verschmälert, daß sie eine Grundfläche von mindestens 0,5 $m^2$ und vorzugsweise höchstens 0,6 bis 0,7 $m^2$ aufweist, daß sie an der der längeren Seitenwand (3) gegenüberliegenden Seitenwand (4) eine Türöffnung (5) aufweist, und daß sie einen abnehmbaren Deckel (8) aufweist.

2. Ferkelbox nach Anspruch 1, dadurch gekennzeichnet, daß sie einen trapezförmigen oder dreieckförmigen Grundriß aufweist.

3. Ferkelbox nach Anspruch 1 oder 2, dadurch gekennzeichnet, daß die Länge ihres Grundrisses ungefähr dem 1 1/2-fachen der größten Breite desselben entspricht.

4. Ferkelbox nach Anspruch 1, 2 oder 3, dadurch gekennzeichnet, daß ihre Höhe mindestens 500 mm, vorzugsweise ungefähr 600 mm, beträgt.

5. Ferkelbox nach einem der Ansprüche 1 bis 4, dadurch gekennzeichnet, daß die Türöffnung (5) ungefähr in der Längsmitte der der längeren Seitenwand (3) gegenüberliegenden Seitenwand (4) angeordnet ist.

6. Ferkelbox nach einem der Ansprüche 1 bis 5, dadurch gekennzeichnet, daß die Türöffnung (5) eine Breite von ungefähr 220 mm und höchstens aber von 250 mm aufweist.

7. Ferkelbox nach einem der Ansprüche 1 bis 6, dadurch gekennzeichnet, daß die Höhe der Türöffnung (5) ungefähr 250 mm beträgt.

8. Ferkelbox nach einem der Ansprüche 1 bis 7, dadurch gekennzeichnet, daß an der Decke oder oberhalb der Unterfläche der Decke wenigstens ein Heizkörper angeordnet ist.

9. Ferkelbox nach einem der Ansprüche 1 bis 8, dadurch gekennzeichnet, daß die Heizung thermostatisch geregelt ist.

10. Ferkelbox nach einem der Ansprüche 1 bis 9, dadurch gekennzeichnet, daß die Türöffnung (5) verschließbar ist.

0144307

## FIG.1

## FIG.2

## FIG.3

## FIG.4